# EUROPEAN PATENT SPECIFICATION

(11) **EP 4 553 665 B1**
(45) Date of publication and mention of the grant of the patent: **28.01.2026**
(21) Application number: 23889834.0
(22) Date of filing: 27.09.2023
(51) Int. Cl.: G06F 12/08, G06F 12/0855, G06F 12/0868

(54) **CACHE, CACHE MANAGEMENT METHOD, AND ELECTRONIC DEVICE**
CACHE, CACHE-VERWALTUNGSVERFAHREN UND ELEKTRONISCHE VORRICHTUNG
MÉMOIRE CACHE, PROCÉDÉ DE GESTION DE MÉMOIRE CACHE ET DISPOSITIF ÉLECTRONIQUE

(43) Date of publication of application: 14.05.2025
(73) Proprietor: VeriSilicon Microelectronics (Shanghai) Co., Ltd., Shanghai 201203 (CN)
(72) Inventor: SONG, Zhangxian, Shanghai 201203 (CN); HUTSELL, Brian, Shanghai 201203 (CN); CHI, Cheng, Shanghai 201203 (CN); CAI, Mike, Shanghai 201203 (CN); LU, Rong, Shanghai 201203 (CN); QIN, Kui, Shanghai 201203 (CN); WU, Jianbing, Shanghai 201203 (CN); CHEN, Xiaoying, Shanghai 201203 (CN)
(74) Representative: Locas, Davide
(86) International application number: PCT/CN2023/121941
(87) International publication number: WO 2025/065324

(56) References cited:
- CN-A- 102 609 378
- CN-A- 105 095 116
- CN-A- 116 719 760
- US-A1- 2011 219 208
- US-A1- 2015 143 053
- US-A1- 2020 142 605

## Description

### Technical Field

The present application relates to the field of chips, specifically to a cache, a cache management method, and an electronic device.

### Background Art

To increase the performance of the processor, a cache is set up between the processor and the memory. When the processor needs to access memory, the processor will first look the data up in the cache, and if the data is hit in the cache, it will be returned directly to the processor for processing; if the data is miss in the cache, it will be read from memory and returned to the processor for processing, and at the same time, the data will be saved in the cache, so that the data can be directly retrieved from the cache later on without having to invoke the memory again.

In the field of cache management, existing technologies have made efforts to optimize request handling and transaction ordering. For instance, US 2011/219208 A1 discloses a cache memory architecture comprising a first request queue associated with the processor core, which receives and stores issued store instructions, and a second request queue associated with at least one local cache memory device of the first processor core, which receives and stores the issued store instructions from the first processor core. Additionally, US 2020/142605 A1 discloses a transaction manager configured to track a large number of outstanding write transaction addresses using a priority queue and to maintain command order for Read After Write transactions.

Due to the small storage space of the cache, the data stored in the cache needs to be updated frequently when the processor is accessing large amounts of data. During the data updating process, the processor sends data request to the cache, the cache requests the data that the processor needs from the memory, the memory returns the data to the cache, and the cache returns the data to the processor. Due to the long physical distance between the cache and memory, it usually takes hundreds of clock cycles for data to be transferred from memory to cache, and the cache spends most of its working time waiting for the memory to transfer data to the cache, which has a significant impact on the performance of the cache.

### Summary

The object of embodiments of the present application is to provide a cache, a cache management method, and an electronic device, for improving cache The invention is set out in the appended independent claims. Advantageous embodiments are defined by the appended dependent claims.

In the first aspect, the present application provides a cache, comprising: a plurality of cache lines, a first read request queue, and a second read request queue; the first read request queue is configured for storing and sending a first read request to a memory controller; the first read request is configured for requesting data from memory and storing the data in the memory controller; the number of first read requests that can be stored in the first read request queue is greater than that of the number of cache lines; the second read request queue is configured to store and send a second read request to a memory controller; the second read request corresponds one-to-one with the first read request; and the second read request is used to request data corresponding to the first read request to the memory controller in the event that the cache line corresponding to the first read request is idle.

In an embodiment of the present application, data is stored in the memory controller in advance, by pre-sending a first read request to the memory controller that exceeds the number of cache lines. When the cache line is idle, the data is obtained directly from the memory controller, which reduces the time spent waiting for the data to be transferred from memory to the cache, thereby improving the performance of the cache.

In optional embodiments, the cache further comprises a third read request queue, which is configured to store a cache line index corresponding to the first read request and to store data corresponding to the first read request in a cache line corresponding to the first read request based on the cache line index of the first read request.

In optional embodiments, the cache further comprises: a cache controller, which is configured for allocating a cache line for a request sent by a processor, wherein the request is a request that does not hit the cache; a first buffer, which is configured for determining whether a read-after-write (i.e., writing first, and then reading) situation exists in a cache line corresponding to a request, wherein if a read-after-write situation does not exist in a cache line corresponding to such a request, a first read request is generated and sent to the first read request queue; if a read-after-write situation exists in a cache line corresponding to such a request, such a request is stored and whether a read-after-write situation exists in a cache line corresponding to a next request of such a request is determined.

In an embodiment of the present application, when a request has a read-after-write situation, the request is saved to the first buffer, the request does not generate a first read request, and the cache can continue to process subsequent requests for the request without waiting for the read-after-write situation to be released to process subsequent requests, thereby reducing the impact of the read-after-write situation on the performance of the cache, and further improving the performance of the cache.

In an optional embodiment, the first buffer is further used to generate a first read request corresponding to a request, when the read-after-write situation corresponding to the request saved in the first buffer is released.

In embodiments of the present application, when a request appears read-after-write situation, the request is saved in a first buffer and the cache processes subsequent requests for the request. After the read-after-write situation of the request is released, a first read request corresponding to the request is generated so that the request with the read-after-write situation can continue to be processed by the cache.

In an optional embodiment, the first buffer comprises a group of flip-flops with the same number as that of the cache lines, wherein each flip-flop corresponds to one cache line, the flip-flop is used to store a request for which there is a read-after-write situation, the cache line corresponding to the request is the same as the cache line corresponding to the flip-flop that stores the request.

In an optional implementation, the cache controller is specifically used for allocating a cache line to a request sent by the processor from cache lines other than that corresponding to the target request, wherein the target request is a request stored in the first buffer.

In an embodiment of the present application, when the cache controller determines a cache line for a request, it allocates a cache line for the request sent by the processor from a cache lines where no read-after-write situation exists, thereby avoiding a new read-after-write situation, and further improving the performance of the cache.

In optional embodiments, the cache further comprises: a second buffer and a send queue; the second buffer is configured for storing a write request, a total number of requests, and a number of completed requests for respective cache lines; and when the total number of requests corresponding to one cache line is the same as the number of completed requests corresponding to that cache line, the write request corresponding to that cache line is sent to the send queue.

In an embodiment of the present application, the total number of requests and the number of completed requests of the cache line are compared, and when these two are the same, the write request corresponding to the cache line is sent to the send queue, thereby realizing writing back the data in the cache line to the memory.

In an optional embodiment, the second buffer comprises a group of flip-flops with the same number as that of the cache lines, wherein each flip-flop corresponds to one cache line, the flip-flop is used to store the write request, the total number of requests, and the number of completed requests of its corresponding cache line.

In optional embodiments, the cache further comprises: an arbitration module; the arbitration module is used to determine the pending cache line based on the state of each cache line and the preset rule; and/or
the cache further comprises a multi-thread queue; the multi-thread queue comprises a plurality of threads, wherein each thread corresponds to one cache line, and each thread is used to store pending requests for its corresponding cache line.

In the second aspect, the present application provides a cache management method applied to a cache of the preceding first aspect, wherein the cache comprises a plurality of cache lines, a first read request queue, and a second read request queue. The method comprises that the first read request queue sends a first read request to a memory controller; the first read request is used to request data from the memory, and store the data in the memory controller; the second read request queue sends a second read request to the memory controller when the cache line corresponding to the first read request is idle; and the second read request is used to request data corresponding to the first read request from the memory controller.

In an optional embodiment, the cache further comprises a third read request queue, the method further comprises that the third read request queue stores line index corresponding to the first read request in a cache line corresponding to the first read request based on the cache line index of the first read request.

In an optional embodiment, the cache further comprises a cache controller and a first buffer, the method further comprises that the cache controller allocates a cache line for a request sent by a processor; the request is a request that does not hit the cache; the first buffer determines whether there is a read-after-write situation in a cache line corresponding to the request; if there is no read-after-write situation in a cache line corresponding to the request, a first read request is generated; and if there is a read-after-write situation in a cache line corresponding to the request, the request is saved in the first buffer and whether there is a read-after-write situation in a cache line corresponding to the next request of the request is determined.

In optional embodiments, the method further comprises: the first buffer generates a first read request corresponding to a request when the read-after-write situation corresponding to the request saved in the first buffer is released.

In an optional embodiment, the first buffer comprises a group of flip-flops with the same number as that of the cache lines, wherein each flip-flop corresponds to one cache line, the flip-flop is used to store a request for which there is a read-after-write situation, and the cache line corresponding to the request is the same as the cache line corresponding to the flip-flop storing the request.

In an optional embodiment, the allocating cache line for a request sent by the processor comprises: the cache controller allocating a cache line for a request sent by the processor from cache lines other than the cache line corresponding to the target request, wherein the target request is a request stored in the first buffer.

In optional embodiments, the cache further comprises: a second buffer and a send queue, wherein the method further comprises that the second buffer saves the write request, the total number of requests, and the number of completed requests for each cache line; and when the total number of requests corresponding to one cache line is the same as the number of completed requests corresponding to that cache line, the write request corresponding to that cache line is sent to a send queue, such that the send queue sends the write request to the memory controller.

In an optional embodiment, the second buffer comprises a group of flip-flops with the same number as that of the cache lines, wherein each flip-flop corresponds to one cache line, and the flip-flop is used to store the write request, the number of a pending request, and the number of completed request of its corresponding cache line.

In optional embodiments, the cache further comprises: an arbitration module; and the method further comprises that
the arbitration module is used to determine the pending cache line based on the state of each cache line and the preset rule; and/or
the cache further comprises: a multi-thread queue, wherein the multi-thread queue comprises a plurality of threads, each thread corresponds to one cache line; and the method further comprises that each thread stores the pending request of its corresponding cache line.

In the third aspect, the present application provides an electronic device, comprising: a processor and the cache described in any one in the above first aspect.

### Brief Description of Drawings

To more clearly illustrate the technical solutions of the embodiments of the present application, the drawings to be used in the embodiments of the present application will be briefly introduced below, and it should be understood that the following drawings only show certain embodiments of the present application, and therefore should not be regarded as a limitation of the scope, and other relevant drawings can be obtained from these drawings by a person of ordinary skill in the art without inventive effort.
FIG. 1 is a block diagram of an electronic device provided by an embodiment of the present application;
FIG. 2 is a structural schematic view of a cache provided by an embodiment of the present application;
FIG. 3 is a structural schematic view of a first buffer provided by an embodiment of the present application;
FIG. 4 is a workflow diagram of a cache provided by an embodiment of the present application; and
FIG. 5 is a flowchart of a cache management method provided by an embodiment of the present application.

Reference numerals: 100-electronic device; 101-processor; 102-cache; 103-memory controller; 104-memory; 201-first read request queue; 202-second read request queue; 203-third read request queue; 204-cache controller; 205-first buffer; 206-second buffer; 207-send queue; 208-arbitration module; 209-multi-thread queue; 210-memory unit.

### Detailed Description of Embodiments

The technical solutions in the embodiments of the present application will be described below in conjunction with the drawings in the embodiments of the present application.

In order to improve the performance of cache, the present disclosure provides a cache, a cache management method, and an electronic device.

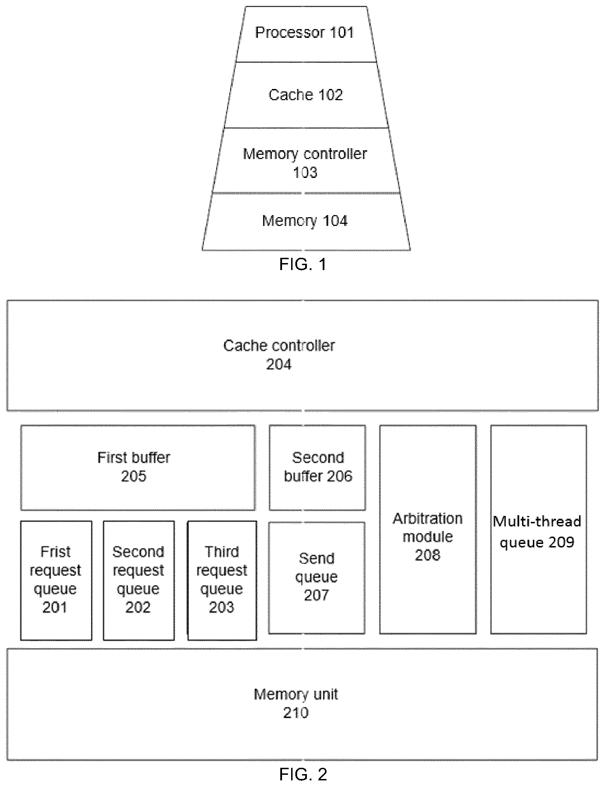

Referring to FIG. 1, FIG. 1 is a block diagram of an electronic device provided by an embodiment of the present application, the electronic device 100 includes a processor 101, a cache 102, a memory controller 103, and a memory 104. The memory controller 103 is arranged between the cache 102 and the memory 104. The processor 101 can access the cache 102, which stores the current data that the processor 101 needs to access. When there is no data stored in the cache 102 that the processor 101 needs to access, the cache 102 sends a read request to the memory controller 103, and the memory controller 103 obtains the data that the processor 101 needs to access from memory 104 based on the read request. After the processor 101 has finished processing the data, the cache 102 sends a write request to the memory controller 103, which updates the data in the memory 104 in accordance with the write request.

The processor 101 has signal processing capability and can be a Central Processing Unit (CPU), a Graphics Processing Unit (GPU), a Pixel Processor (PP), a Vertex Processor (VP), and the like.

The cache 102 includes multiple cache lines, which are the smallest unit for transmitting data between cache 102 and memory controller 103. Each cache line has attributes such as tag (Tag), index (idx) and validity (valid), etc. Tag is used to identify the address of the data in the cache line in memory 104, idx is used to identify the position of the cache line in cache 102, and valid is used to identify whether the data currently stored in the cache line is valid or not, and only the data in the valid cache line can be outputted by cache 102. When the cache 102 receives the request sent by the processor 101, the cache controller generates a Tag according to the address of the request and compares it with the Tag of each cache line, if there is a cache line with the same Tag, which is called a cache hit, the cache 102 will directly return the data in the corresponding cache line to the processor 101. If no cache line with an identical Tag exists, it is called a cache miss. The cache 102 first request the corresponding data from the memory controller 103 and store that data in a cache line before returning it to the processor 101. After the cache 102 is initialized, the default valid attribute is invalid for all cache lines, and each cache line is set to be valid after it receives the data returned by the memory controller 103.

The electronic device 100 can be, but is not limited to, physical devices such as desktops, laptops, smartphones, smart wearable device, in-vehicle devices, etc. In addition, an electronic device does not have to be a single device but can be a combination of devices, such as a server cluster, and so on.

Referring to FIG. 2, FIG. 2 is a block diagram of a cache provided by an embodiment of the present application, and the cache 102 includes a first read request queue 201 and a second read request queue 202.

The first read request queue 201 is configured to store the first read request. The first read request is used to request data from the memory 104 and store the data in the memory controller 103. The number of first read requests that can be stored in the first read request queue 201 is greater than the number of cache lines in the cache.

The second read request queue 202 is configured to store the second read request. The second read request corresponds one-to-one with the first read request, and the second read request is used to request data corresponding to the first read request from the memory controller 103 when the cache line corresponding to the first read request is idle.

In some embodiments, the first read request queue 201 and the second read request queue 202 can be the first-in-first-out queue. The present application does not limit the specific realization form of the first read request queue 201 and the second read request queue 202, wherein the first read request queue 201 and the second read request queue 202 can be any hardware with the function of storing data.

The processor 101 generates a large number of requests during data processing, these requests are sent to the cache 102. When one request arrives at cache 102, if the request does not hit a cache line in the cache 102, one cache line is assigned to the request and one first read request and one second read request are generated, the first read request is stored in the first read request queue 201 and the second read request is stored in the second read request queue 202. When the memory controller 103 can receive the first read requests, the first read request queue 201 sends the stored first read requests to the memory controller 103 in sequence, and after receiving the first read request, the memory controller 103 acquires the corresponding data from the memory 104 following the first read request and saves the acquired data in its own storage unit.

When the cache line corresponding to a particular first read request is idle, the second read request queue 202 sends the second read request corresponding to the first read request to the memory controller 103, and the memory controller 103, after receiving this second read request, sends the data corresponding to the first read request stored in its own storage unit to the cache 102, thereby realizing obtaining the data needed by the processor 101 from the memory 104 and storing the data in the allocated cache line.

It should be noted that the idle cache line means that the cache line is in an initialized state or the currently stored data has been accessed by the processor 101 and updated to the memory 104, and the currently stored data in the cache line can be overwritten by other data.

When the processor 101 generates a large number of requests and none of those requests hit a cache line in the cache 102, each request is assigned one cache line. Due to the limited number of cache lines in cache 102, when the number of requests that fail to hit cache 102 is greater than the number of cache lines, then there are multiple requests to be processed by a single cache line.

For example, cache 102 is provided with 16 cache lines (cache line 1-cache line 16), the processor 101 sends 32 requests with different Tags to cache 102, and none of the 32 requests hit the cache line in cache 102. The cache 102 assigns requests 1-16 to cache lines 1-16 in order and requests 17-32 to cache lines 1-16 in order. The cache line 1 processes request 1 and request 17. Each request generates one first read request and one second read request. For ease of illustration, the first read request generated by the first request is first read request 1, the second read request generated by the first request is second read request 1; the first read request generated by the second request is first read request 2, the second read request generated by the second request is second read request 2, and so on. The first read request queue 201 stores first read requests 1 to 32. The first read request queue 201 sends the first read request 1 to the first read request 32 to the memory controller 103 when the memory controller 103 is available to receive the first read request, the memory controller 103. The memory controller 103 requests from memory the data corresponding to the requests 1-32 and stores these data in the storage space of the memory controller 103.

It is assumed that each cache line is in an idle state in the initial state. The first request corresponds to cache line 1, and when cache line 1 is idle, the second read request queue 202 sends the second read request 1 to the memory controller 103, which returns the data obtained according to the first read request 1 to the cache, and cache line 1 stores the data corresponding to the first request. Subsequent processor 101 accesses cache line 1 to perform the related data processing for the data corresponding to request 1. During this process, cache line 1 is occupied.

The request 17 corresponds to cache line 1. Since cache line 1 is processing the request 1 and cache line 1 is not idle, the second read request queue 202 will not send the second read request 17 to the memory controller 103, and the memory controller 103 will not return the data corresponding to the request 17, so as to avoid that the data corresponding to the request 1 stored in cache line 1 is overwritten by the data corresponding to the request 17.

When the data corresponding to the request 1 has been accessed by the processor 101, the second buffer 206 will send a write request to the memory controller 103 to update the data in the cache line where the data corresponding to the request 1 is located to the memory 104, since the request 17 requires the use of the cache line 1, and thereafter the cache line 1 will be in an idle state. The second read request queue 202 sends the second read request 17 to the memory controller 103, which returns the data corresponding to the request 17 and overwrites the data corresponding to the request 1 originally stored in the cache line 1 with the data corresponding to the request 17. Subsequent processor 101 accesses cache line 1 to perform the data processing associated with the data corresponding to the request 17.

The physical distance between the cache 102 and the memory 104 is farther away, and the delay in transferring data between these two is greater, typically up to hundreds of clock cycles. The physical distance between the memory controller 103 and the cache 102 is closer, such that the delay in transferring data between these two is small, typically only a few tens of clock cycles. Embodiments of the present application store data in the memory controller 103 in advance, by sending a first read request to the memory controller 103 in advance that exceeds the number of cache lines. When the cache line is idle, the data is obtained directly from the memory controller 103, reducing the time spent waiting for the data to be transferred from the memory 104 to the cache 102, thereby improving the performance of the cache.

As an optional embodiment, the cache 102 further includes a third read request queue 203.

The third read request queue 203 is configured to store the cache line index corresponding to the first read request. After the second read request queue 202 sends the second read request, it stores the corresponding cache line index (i.e., cache line idx) in the third read request queue 203, so that after the MC returns the data corresponding to the first read request, the third read request queue 203 will store the returned data in the cache line corresponding to the first read request according to the cache line index corresponding to the first read request.

In some embodiments, the first read request queue 201 is also used to store a cache line idx storing the read request data in the cache. The first read request queue 201 sends the first read request to the memory controller 103 and then sends the cache line idx storing the data in the cache 102 to the third read request queue 203.

In other embodiments, the second read request queue 202 is further used to store a cache line idx storing read request data in the cache. The second read request queue 202 sends the second read request to the memory controller 103, and then sends the cache line idx storing the data in the cache 102 to the third read request queue 203.

Further, as an optional embodiment, the cache 102 further comprises: a cache controller 204 and a first buffer 205.

The cache controller 204 is configured for allocating cache lines for requests sent by the processor 101.

The first buffer 205 is used to determine whether the cache line corresponding to the request is in a read-after-write situation, wherein if the cache line corresponding to the request is not in a read-after-write situation, a first read request is generated and sent to the first read request queue 201; if the cache line corresponding to the request is in a read-after-write situation, the request is saved, and whether there is a read-after-write situation in a cache line corresponding to the next request of the request is determined.

In an embodiment of the present application, after the processor 101 sends a request to the cache 102, the cache controller 204 generates a Tag according to the address of the request and compares the Tag with the Tag of each cache line, and if a cache is hit, the cache 102 returns the data in the hit cache line to the processor 101, and the processor 101 processes the data.

If the cache is not hit, it means that cache 102 does not have the data needed by processor 101 stored in it, and cache 102 needs to obtain that data from memory 104. To obtain the data, the cache controller 204 allocates a cache line for the request according to a predetermined replacement algorithm. In the case of frequent requests to cache 102 by processor 101, if there are no idle cache lines in cache 102, a read-after-write situation will occur.

The read-after-write situation means that one cache line in cache 102 sends a write request to memory controller 103 to write its own stored data back into memory 104, only when a new request is allocated for that cache line. To ensure data consistency, the memory 104 will reply to cache 102 with a write completion signal after receiving data lineA sent from the cache line. When a new request B with same Tag as lineA requests the cache before the cache 102 receives the write completion signal of the data lineA, the cache 102 can only send the first read request corresponding to the new request B to the memory controller 103 to request the data from the memory 104 after the cache 102 receives the write completion signal of the data lineA, which is called the read-after-write phenomenon. The release of read-after-write situation means that the write completion signal associated with the read-after-write phenomenon arrives at the cache 102, and the cache 102 is allowed to send the first read request corresponding to request B. Due to the long communication delay between the cache 102 and the memory 104, the cache 102 needs to wait for a longer time to continue its work when there is a read-after-write situation. In addition, cache 102 has only one cache line for data interaction at the same time, so once a read-after-write situation occurs, subsequent requests need to wait for the release of the read-after-write situation before cache 102 can continue to process the subsequent requests, which leads to a lower cache performance.

In order to solve the above problem, in an embodiment of the present application, a first buffer 205 is provided in a cache, and after the cache controller 204 allocates a cache line for one request, the first buffer 205 makes a judgment on a cache line corresponding to the request, and if there is no read-after-write situation in a cache line corresponding to the request, a first read request is generated, the first read request is sent to the first read request queue 201, and the corresponding data is obtained from the memory 104 through the first read request queue 201. If there is a read-after-write situation in the cache line corresponding to the request, the request is saved in the first buffer 205, and then it is judged whether there is a read-after-write situation in the cache line corresponding to the next request of the request. The next request is processed in the same manner as the foregoing processing.

By the above method, when one request has a read-after-write situation, the request is saved in the first buffer 205, the request does not generate a first read request, and the cache 102 can continue to process the subsequent requests of the request without waiting for the release of read-after-write situation to process the subsequent requests, thus further improving the performance of the cache.

Further, as an optional embodiment, the first buffer 205 is further used to generate a first read request corresponding to a request, when the read-after-write situation corresponding to the request saved in the first buffer is released.

In an embodiment of the present application, when the read-after-write situation of a request saved in the first buffer 205 is released, the request is removed from the first buffer 205, a first read request is generated based on the request, a first read request is sent to the first read request queue 201, and data corresponding to the request is obtained from the memory 104 through the first read request queue 201.

Further, in some embodiments, the first buffer 205 includes a group of flip-flops with the same number of cache lines, wherein each flip-flop corresponds to one cache line, the flip-flop is used to store a request for which there is a read-after-write situation, and the cache line corresponding to the request is the same as that corresponding to the flip-flop that stores the request.

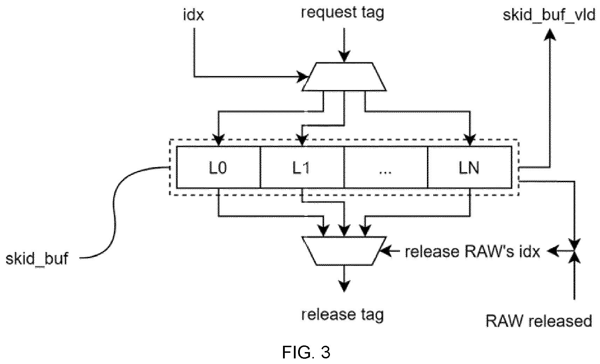

As shown in FIG. 3, skid_buf in FIG. 3 is a flip-flop group, wherein one cache line corresponds to one flip-flop. If the idx of the cache line assigned to a request is 1 and the cache line has a read-after-write situation, the tag corresponding to the request (i.e., the request tag in FIG. 3) is saved in the L1 flip-flop. The skid_buf_vld is used to characterize whether each flip-flop in the flip-flop group holds data, so that subsequently the arbitration module can determine the state of each cache line. RAW released indicates that the flip-flop group receives a release of read-after-write (RAW) situation for a cache line. The release RAW's idx indicates the idx corresponding to the cache line that has been released from the read-after-write situation. The release tag indicates that the tag stored in the flip-flop corresponding to a cache line is removed from the flip-flop after receiving the release of read-after-write situation for the cache line.

Further, as an optional embodiment, the cache controller 204 allocates cache lines for requests sent by the processor as follows.

Cache lines are allocated to requests sent by the processor from cache lines other than that corresponding to the target request, wherein the target request is the request that is stored in the first buffer.

In an embodiment of the present application, if a read-after-write situation occurs in a cache line, in order to improve the performance of the cache, when allocating a cache line for a subsequent request, a cache line is allocated for the subsequent request from cache lines other than the cache line.

Specifically, a target queue is provided in the cache controller 204, and the target queue stores cache line information that can be allocated. When allocating a cache line, the cache controller 204 determines a cache line from the target queue based on a predetermined replacement algorithm. A set of flip-flops are provided in the cache controller 204 to save cache line information in the read-after-write situation. When a cache line has a read-after-write situation, the cache line information will be removed from the target queue and put into the flip-flop group, and the cache line in the flip-flop group will not be selected by the replacement algorithm; when the read-after-write situation of the cache line is released, the cache line information will be removed from the flip-flop group and added to the target queue.

In the above manner, when the cache controller 204 determines a cache line for a request, it allocates a cache line for the request sent by the processor from cache lines in which no read-after-write situation exists, so as to avoid a new read-after-write situation, thereby further improving the performance of the cache.

Further, as an optional embodiment, the cache 102 further comprises: a second buffer 206 and a send queue 207.

The second buffer 206 is configured for storing the write requests, the total number of requests, and the number of completed requests for each cache line; when the total number of requests corresponding to one cache line is the same as the number of completed requests corresponding to the cache line, the write request corresponding to the cache line is sent to a send queue 207.

The send queue 207 is used to store write requests to be sent and sends the write requests to the memory controller 103, which writes back the data stored in the cache line to the memory 104 based on the write requests.

Further, as an optional embodiment, the send queue 207 is further used to store write requests that have been sent but have not received a write completion signal. The send queue 207 includes write requests to be sent and write requests that have been sent but have not received a write completion signal. The first buffer 205 can determine whether there is a read-after-write situation on the cache line based on all write requests stored in the send queue 207. If the cache line corresponding to a newly generated read request is the same as the cache line corresponding to a certain write request stored in send queue 207, then it is determined that there is a read-after-write situation for that cache line.

In some embodiments, using a cache line as an example, during the process of processor 101 requesting to the cache 102, after each request arrives at the cache 102, the cache 102 determines whether the request gets a hit, and if the cache line is hit, the total number of requests for the cache line is increased by one. The number of completed requests for a cache line is increased by 1 for each request accessed by that cache line. When the total number of requests and the number of completed requests in this cache line are the same, it means that the processor 101 will not access the data stored in this cache line in the future, and it needs to write back the current data stored in this cache line into the memory 104. As a result, the second buffer 206 sends the write request corresponding to this cache line to the send queue 207.

In other embodiments, when the total number of requests and the number of completed requests for the cache line are the same and there is a read request for the cache line in the first read request queue 201 or the second read request queue 202, it means that the processor 101 has finished processing the data stored in the current cache line, and it needs to write back the current data stored in the cache line into the memory 104, so as to allocate the cache line to a subsequent request. The second buffer 206 sends the write request corresponding to this cache line to the send queue 207.

Further, in some embodiments, the second buffer 206 includes a group of flip-flops with the same number of cache lines, each flip-flop corresponds to one cache line, and the flip-flop is used to store the write request, the total number of requests, and the number of completed requests for their corresponding cache line.

For example, there are 16 cache lines in cache 102, and the idx of these 16 cache lines is 0-15; 16 flip-flops are provided in the second buffer 206, and the number of these 16 flip-flops is L0-L15. The idx of the cache line corresponding to flip-flop L0 is 0; and the idx of the cache line corresponding to flip-flop L1 is 1, and so on. Flip-flop L0 stores the write request, the total number of requests, and the number of completed requests corresponding to cache line 0. When it is determined that the total number of requests for cache line 0 is the same as the number of completed requests, flip-flop L0 sends the write request corresponding to cache line 0 to send queue 207.

Further, as an optional embodiment, the cache 102 further comprises: an arbitration module 208, wherein the arbitration module 208 is used to determine the cache line to be processed based on the state of each cache line and the preset rule.

In embodiments of the present disclosure, the state of the cache line is the valid attribute of the cache line.

The cache 102 makes the first read request queue 201 and the second read request queue 202 store data in the memory controller 103 in advance, and when a particular cache line is idle, the data is obtained directly from the memory controller 103. After the cache line obtain data from the memory controller 103, the valid attribute of the cache line is valid, the data of the cache line can be output by the cache 102, such that the cache 102 can then process the request corresponding to the cache line. Therefore, the valid attribute is valid for multiple cache lines that exist in cache 102 at the same time.

In addition, due to the setting of the first buffer 205, when a read-after-write situation for one request occurs, the request does not generate a first read request, and the cache 102 processes subsequent requests of the request. After the read-after-write situation is released, the request is removed from the first buffer 205, a first read request is generated based on the request, the first read request is sent to the first read request queue 201, and the data corresponding to the request is obtained from the memory 104 through the first read request queue 201. The above approach results in frequent cases where the valid attributes of multiple cache lines at the same time are all valid in cache 102.

The cache 102 has only one cache line for data interaction at the same time, in the embodiment of the present application, an arbitration module 208 is set up, wherein a preset rule is provided in the arbitration module 208, based on the preset rule, the cache line to be processed is determined from a plurality of cache lines whose validity attribute is valid.

In some embodiments, the predetermined rules can be set as follows.

Priority 1: the valid attribute of the cache line is valid and the idx of the cache line is the same as the first idx to be output in the first read request queue 201.

Priority 2: the valid attribute of the cache line is valid and the idx of the cache line is the same as the second idx to be output in the first read request queue 201.

Priority 3: the valid attribute of the cache line is valid and there is a read-after-write situation on the cache line.

Priority 4: the valid attribute of the cache line is valid and there is a write request to be sent on the cache line (i.e., the cache line is assigned to a subsequent request).

Priority 5: the valid attribute of the cache line is valid.

If a cache line satisfies priority 1, the arbitration module 208 takes the cache line as the cache line to be accessed; if there is no cache line that satisfies priority 1 but there is a cache line that satisfies priority 2, the arbitration module 208 takes the cache line as the cache line to be accessed, and so on.

In the above preset rules, since it takes a longer time for the cache 102 to request data from the memory 104, priority is given to accessing the cache line that sends the first read request to the memory 104. When the valid attribute of the cache line corresponding to the first two first read requests to be output in the first read request queue 201 is invalid, processing cache line in which there is a read-after-write situation is prioritized, so that the read-after-write situation can be released as soon as possible. If there is no cache line having a read-after-write situation or if the valid attribute of a cache line having read-after-write situation is invalid, priority is given to processing cache line corresponding to the write request to be sent. If there is no cache line corresponding to the write request to be sent, then the cache line whose valid attribute is valid is accessed.

In other embodiments, the predetermined rules can be set as follows.

Priority 1: the valid attribute of the cache line is valid and the idx of the cache line is the same as the first idx to be output in the first read request queue 201.

Priority 2: the valid attribute of the cache line is valid and the idx of the cache line is the same as the second idx to be output in the first read request queue 201.

Priority 3: the valid attribute of the cache line is valid and the idx of the cache line is the same as the third idx to be output in the first read request queue 201.

Priority 4: the valid attribute of the cache line is valid and there is a read-after-write situation on the cache line.

Priority 5: the valid attribute of the cache line is valid and there is a write request to be sent on the cache line (i.e., the cache line is assigned to a subsequent request).

Priority 6: the valid attribute of the cache line is valid.

It should be noted that the embodiments of the present application do not make specific limitations on the preset rules, and the preset rules can be set according to the actual application scenario of the cache 102. For example, if there are frequent read-after-write situations in the actual application scenario of the cache 102, the priority of the condition "the valid attribute of the cache line is valid and there is a read-after-write situation on the cache line" can be increased. On the contrary, if the actual application scenario of the cache 102 has fewer read-after-write situations, the priority of the condition "the valid attribute of the cache line is valid and there is a read-after-write situation in the cache line" can be lowered.

Further, as an optional embodiment, the cache 102 further comprises: a multi-thread queue 209, wherein the multi-thread queue 209 comprises a plurality of threads, each thread corresponds to one cache line, and each thread is used to store pending requests for its corresponding cache line.

The multi-thread queue 209 also includes a multi-thread controller and random access memory (RAM), wherein the multi-thread queue 209 has the threads in a same number as that of the cache lines. After the request sent by the processor 101 reaches the cache 102, the multi-thread controller saves the request corresponding to the cache line whose idx is N in thread N, and all threads share the RAM. Requests between different threads are not sequential but requests from the same thread (i.e., requests corresponding to the same cache line) are strictly order-preserving.

After the arbitration module 208 has identified a cache line to be accessed, the request corresponding to that cache line is output from the multi-thread queue 209.

As an optional embodiment, the cache 102 further includes a storage unit 210. The storage unit 210 is divided into a plurality of cache lines for storing data obtained from the memory 104.

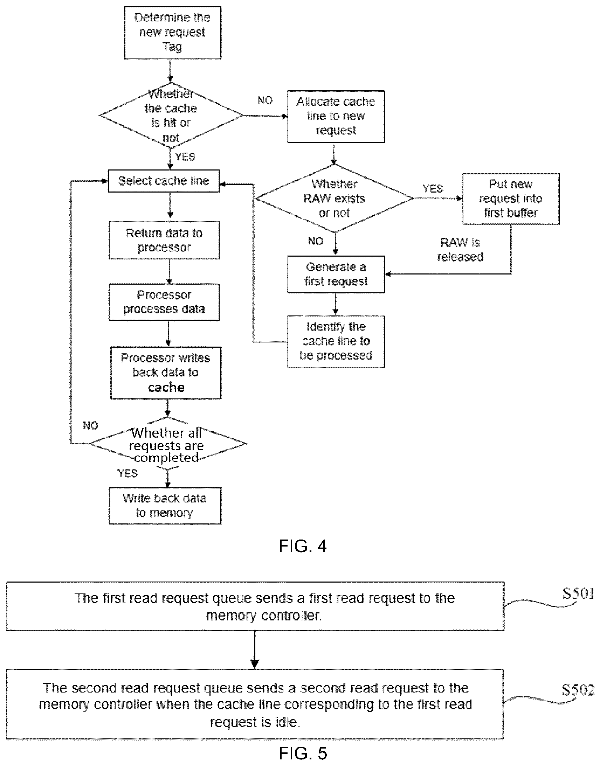

Referring to FIG. 4, FIG. 4 is a workflow diagram of a cache provided by embodiments of the present application.

The cache 102 obtains a new request from processor 101, and generates a Tag based on the address of the new request and compares it to the Tag of each cache line, to determine whether the Tag of the new request hits the cache line.

If a cache line is hit, the data from the cache line is returned to processor 101. Processor 101 accesses the data returned from the cache line and writes the processed data to the cache line. It then determines whether the access for all requests in that cache line is complete, and if not, the data in the cache line is returned to the processor 101 again, and the above process is repeated until the access for all requests in that cache line is complete. If the access for all requests for this cache line is complete, the data for this cache line can be written back to memory 104 through the send queue 207.

If the cache line is not hit, a cache line is allocated for the new request and it determines whether there is a read-after-write situation for that cache line. If a read-after-write situation exists, the new request is saved in the first buffer 205 until the read-after-write situation is released. After the read-after-write situation is released, a first read request is generated based on that request. If there is no read-after-write situation, the first read request is generated based on this request. The arbitration module 208 then determines the cache lines to be accessed. The arbitration module 208 processes the cache lines to be accessed after identifying the cache lines to be accessed. The process is similar to that described above for new requests after a Tag hits a cache line, and is not repeated here for simplicity.

Based on the same inventive concept, a cache management method is also provided in embodiments of the present application. Referring to FIG. 5, FIG. 5 is a flowchart of a cache management method provided by an embodiment of the present application, which can be applied to the cache 102 in the preceding embodiment. The cache management method can include the following steps.

S501: the first read request queue sending a first read request to the memory controller.

S502: the second read request queue sending a second read request to the memory controller when the cache line corresponding to the first read request is idle.

In embodiments of the present disclosure, the first read request is used to request data from the memory and store the data in the memory controller. The second read request is used to request data corresponding to the first read request from the memory controller.

In an optional embodiment, the cache further comprises a third read request queue, the method further comprises that the third read request queue stores line index corresponding to the first read request in a cache line corresponding to the first read request based on a cache line index of the first read request.

In an optional embodiment, the cache further comprises a cache controller and a first buffer, the method further comprises that the cache controller allocates a cache line for a request sent by a processor; the request is a request that does not hit the cache; the first buffer determines whether there is a read-after-write situation in the cache line corresponding to the request; and if there is no read-after-write situation in the cache line corresponding to the request, a first read request is generated. If there is a read-after-write situation in the cache line corresponding to the request, the request is saved in the first buffer and determine whether there is a read-after-write situation in the cache line corresponding to the next request of the request.

In an optional embodiment, the method further comprises that the first buffer generates a first read request corresponding to a request when a read-after-write situation corresponding to the request saved in the first buffer is released.

In an optional embodiment, the first buffer comprises a group of flip-flops with the same number as that of the cache lines, wherein each flip-flop corresponds to one cache line, the flip-flop is used to store a request for which there is a read-after-write situation, and the cache line corresponding to the request is the same as the cache line corresponding to the flip-flop that stores the request.

In an optional embodiment, the allocating a cache line for a request sent by the processor comprises that the cache controller allocates a cache line for a request sent by the processor from cache lines other than a cache line corresponding to a target request, wherein the target request is a request stored in the first buffer.

In an optional embodiment, the cache further comprises: a second buffer and a send queue, wherein the method further comprises that the second buffer saves the write request, the total number of requests and the number of completed requests for each cache line; when the total number of requests corresponding to one cache line is the same as the number of completed requests corresponding to that cache line, the write request corresponding to that cache line is sent to a send queue, such that the send queue send the write request to the memory controller.

In an optional embodiment, the second buffer comprises a group of flip-flops with the same number as that of the cache lines, wherein each flip-flop corresponds to one cache line, and the flip-flop is used to store the write request, the total number of requests, and the number of completed requests of its corresponding cache line.

In an optional embodiment, the cache further comprises: an arbitration module, wherein the method further comprises that
the arbitration module determines a cache line to be accessed based on the state of the respective cache lines and a preset rule; and/or
the cache further comprises: a multi-thread queue, wherein the multi-thread queue comprises a plurality of threads, and each thread corresponds to one cache line; and the method further comprises that each thread stores pending request for its corresponding cache line.

It can be understood that the cache management method provided in the present application corresponds to the working principle of the aforementioned cache 102, and for the sake of conciseness, the same or similar parts can be cross-referenced and will not be repeated herein.

In the embodiments provided in the present disclosure, it should be understood that the disclosed devices and methods can be realized in other ways. The above-described embodiments of the device are merely schematic, e.g., the division of the described units, which is only a logical functional division, can be divided in another way when actually realized, or, for example, multiple units or components can be combined or can be integrated into another system, or some features can be ignored, or not implemented. At another point, the mutual coupling or direct coupling, or communication connection shown or discussed can be an indirect coupling or communication connection through some communication interface, device, or unit, which can be electrical, mechanical or otherwise.

Alternatively, the units illustrated as separated components can or cannot be physically separated, and the components shown as units can or cannot be physical units, i.e., they can be located in a single place, or they can be distributed to a plurality of network units. Some or all of these units can be selected to fulfill the purpose of this embodiment scheme according to actual needs.

Further, the functional modules in various embodiments of the present application can be integrated to form an independent part, or each module can exist separately, or two or more modules can be integrated to form an independent part.

It should be noted that the functions can be stored in a computer-readable storage medium, if they are implemented in the form of software function modules and are sold or used as stand-alone products. It is understood that the essence of the technical scheme of the present application or the part that contributes to the prior art or the part of the technical solution can be embodied in the form of a software product, which is a computer software product stored on a storage medium comprising instructions to cause a computer device (which can be a personal computer, a server, or a network device, etc.) to carry out all or part of the steps of the method described in the various embodiments of the present application. The aforementioned storage media include USB flash drive, removable hard drive, read-only memory (ROM), random access memory (RAM), disks or CD-ROMs and other media that can store program code.

In this document, relational terms such as first and second are used only to distinguish one entity or operation from another and do not necessarily require or imply any such actual relationship or order between those entities or operations.

## Claims

1. A cache (102), **characterized in that** the cache (102) comprises a plurality of cache lines, a first read request queue (201), and a second read request queue (202); the first read request queue (201) is configured to store and send a first read request to a memory controller (103); the first read request is configured to request data from a memory (104) and storing the data in the memory controller (103); and a number of the first read request that can be stored in the first read request queue (201) is greater than a number of the plurality of cache lines; and the second read request queue (202) is configured to store and send a second read request to the memory controller (103); and the second read request corresponds one-to-one with the first read request, and the second read request is configured to request data corresponding to the first read request to the memory controller (103) in an event that a cache line corresponding to the first read request is idle; wherein the cache line is idle when it is in an initialized state or the currently stored data has been accessed by a processor and updated to a memory, and the currently stored data in the cache line is capable of being overwritten by other data.

2. The cache (102) according to claim 1, wherein the cache (102) further comprises: a third read request queue (203), which is configured to store a cache line index corresponding to the first read request, and to store the data corresponding to the first read request in the cache line corresponding to the first read request based on the cache line index of the first read request.

3. The cache (102) according to claim 1, wherein the cache (102) further comprises: the cache controller (204), which is configured to allocate a cache line for a request sent by a processor, wherein the request is a request that does not hit the cache (102); and a first buffer (205), which is configured to determine whether a read-after-write situation exists in the cache line corresponding to the request, wherein if the read-after-write situation does not exist in the cache line corresponding to the request, a first read request is generated and sent to the first read request queue (201); and if the read-after-write situation exists in the cache line corresponding to the request, the request is stored and whether the read-after-write situation exists in a cache line corresponding to a next request of the request is determined.

4. The cache (102) according to claim 3, wherein the first buffer (205) is further configured to generate a first read request corresponding to a request when the read- after-write situation corresponding to the request saved in the first buffer (205) is released.

5. The cache (102) according to claim 3, wherein the first buffer (205) comprises a group of flip-flops with the same number as that of the cache lines, wherein each flip-flop corresponds to one cache line, the flip-flop is configured to store a request for which a read-after-write situation exists, and the cache line corresponding to the request is the same as the cache line corresponding to the flip-flop storing the request.

6. The cache (102) according to claim 3, wherein the cache controller (204) is configured to allocate a cache line to a request sent by the processor from the cache lines other than that corresponding to a target request, wherein the target request is a request stored in the first buffer (205).

7. The cache (102) according to claim 1, wherein the cache (102) further comprises: a second buffer (206) and a send queue (207); and the second buffer (206) is configured to store a write request, a number of pending requests, and a number of completed requests for respective cache lines; and when the total number of requests corresponding to one cache line is the same as the number of completed requests corresponding to the cache line, the write request corresponding to the cache line is sent to the send queue (207).

8. The cache (102) according to claim 7, wherein the second buffer (206) comprises a group of flip-flops with the same number as that of the cache lines, wherein each flip-flop corresponds to one cache line, and the flip-flop is configured to store the write request, the total number of requests, and the number of completed requests of its corresponding cache line.

9. The cache (102) according to claim 1, wherein the cache (102) further comprises: an arbitration module (208), wherein the arbitration module (208) is configured to determine a pending cache line based on a state of each cache line and a preset rule; and/or the cache (102) further comprises: a multi-thread queue (209), wherein the multi-thread queue (209) comprises a plurality of threads, wherein each thread corresponds to one cache line, and each thread is configured to store pending requests for its corresponding cache line.

10. An electronic device (100), **characterized in that** the electronic device (100) comprises: a processor (101) and the cache (102) according to any one of claims 1-9.

11. A cache management method, **characterized in that** the cache management method is applied the cache (102) according to any one of claims 1-9, wherein the cache (102) comprises the plurality of cache lines, the first read request queue (201) and the second read request queue (202), and the method comprises:
the first read request queue (201) sending the first read request to the memory controller (103), wherein the first read request is configured to request data from the memory (104) and store the data in the memory controller (103); and
the second read request queue (202) sending the second read request to the memory controller (103) when the cache line corresponding to the first read request is idle, wherein the second read request is configured to request data corresponding to the first read request from the memory controller (103).

## Patentansprüche

1. Cache (102), **dadurch gekennzeichnet, dass** der Cache (102) eine Vielzahl von Cache-Zeilen, eine erste Leseanforderungswarteschlange (201) und eine zweite Leseanforderungswarteschlange (202) umfasst; die erste Leseanforderungswarteschlange (201) konfiguriert ist, um eine erste Leseanforderung zu speichern und an eine Speichersteuerung (103) zu senden; die erste Leseanforderung konfiguriert ist, um Daten von einem Speicher (104) anzufordern und die Daten in der Speichersteuerung (103) zu speichern; und eine Anzahl der ersten Leseanforderung, die in der ersten Leseanforderungswarteschlange (201) gespeichert werden kann, größer als eine Anzahl der Vielzahl von Cache-Zeilen ist; und die zweite Leseanforderungswarteschlange (202) konfiguriert ist, um eine zweite Leseanforderung zu speichern und an die Speichersteuerung (103) zu senden; und die zweite Leseanforderung eins zu eins der ersten Leseanforderung entspricht, und die zweite Leseanforderung konfiguriert ist, um Daten, die der ersten Leseanforderung entsprechen, an die Speichersteuerung (103) anzufordern, falls eine Cache-Zeile, die der ersten Leseanforderung entspricht, leer ist;
wobei die Cache-Zeile leer ist, wenn sie sich in einem initialisierten Zustand befindet oder auf die aktuell gespeicherten Daten durch einen Prozessor zugegriffen und in einem Speicher aktualisiert wurde, und die aktuell gespeicherten Daten in der Cache-Zeile durch andere Daten überschrieben werden können.

2. Cache (102) nach Anspruch 1, wobei der Cache (102) ferner umfasst: eine dritte Leseanforderungswarteschlange (203), die konfiguriert ist, um einen Cache-Zeilenindex, der der ersten Leseanforderung entspricht, zu speichern und die Daten, die der ersten Leseanforderung entsprechen, in der Cache-Zeile, die der ersten Leseanforderung entspricht, basierend auf dem Cache-Zeilenindex der ersten Leseanforderung zu speichern.

3. Cache (102) nach Anspruch 1, wobei der Cache (102) ferner umfasst: die Cache-Steuerung (204), die konfiguriert ist, um eine Cache-Zeile für eine durch einen Prozessor gesendete Anforderung zuzuweisen, wobei die Anforderung eine Anforderung ist, die den Cache (102) nicht trifft; und einen ersten Puffer (205), der konfiguriert ist, um zu bestimmen, ob eine Lese-nach-Schreiben-Situation in der Cache-Zeile, die der Anforderung entspricht, vorhanden ist, wobei, falls die Lese-nach-Schreiben-Situation nicht in der Cache-Zeile, die der Anforderung entspricht, vorhanden ist, eine erste Leseanforderung erzeugt und an die erste Leseanforderungswarteschlange (201) gesendet wird; und falls die Lese-nach-Schreiben-Situation in der Cache-Zeile, die der Anforderung entspricht, vorhanden ist, die Anforderung gespeichert wird und bestimmt wird, ob die Lese-nach-Schreiben-Situation in einer Cache-Zeile, die einer nächsten Anforderung der Anforderung entspricht, vorhanden ist.

4. Cache (102) nach Anspruch 3, wobei der erste Puffer (205) ferner konfiguriert ist, um eine erste Leseanforderung, die einer Anforderung entspricht, zu erzeugen, wenn die Lese-nach-Schreiben-Situation, die der in dem ersten Puffer (205) gespeicherten Anforderung entspricht, freigegeben wird.

5. Cache (102) nach Anspruch 3, wobei der erste Puffer (205) eine Gruppe von Flip-Flops mit der gleichen Anzahl wie die der Cache-Zeilen umfasst, wobei jedes Flip-Flop einer Cache-Zeile entspricht, das Flip-Flop konfiguriert ist, um eine Anforderung zu speichern, für die eine Lese-nach-Schreiben-Situation vorhanden ist, und die Cache-Zeile, die der Anforderung entspricht, die gleiche ist wie die Cache-Zeile, die dem Flip-Flop entspricht, das die Anforderung speichert.

6. Cache (102) nach Anspruch 3, wobei die Cache-Steuerung (204) konfiguriert ist, um eine Cache-Zeile einer durch den Prozessor von den Cache-Zeilen gesendeten Anforderung zuzuweisen, die von der verschieden ist, die einer Zielanforderung entspricht, wobei die Zielanforderung eine in dem ersten Puffer (205) gespeicherte Anforderung ist.

7. Cache (102) nach Anspruch 1, wobei der Cache (102) ferner umfasst: einen zweiten Puffer (206) und eine Sendewarteschlange (207); und der zweite Puffer (206) konfiguriert ist, um eine Schreibanforderung, eine Anzahl von ausstehenden Anforderungen und eine Anzahl von abgeschlossenen Anforderungen für jeweilige Cache-Zeilen zu speichern; und wenn die Gesamtanzahl von Anforderungen, die einer Cache-Zeile entspricht, die gleiche ist wie die Anzahl von abgeschlossenen Anforderungen, die der Cache-Zeile entspricht, die Schreibanforderung, die der Cache-Zeile entspricht, an die Sendewarteschlange (207) gesendet wird.

8. Cache (102) nach Anspruch 7, wobei der zweite Puffer (206) eine Gruppe von Flip-Flops mit der gleichen Anzahl wie die der Cache-Zeilen umfasst, wobei jedes Flip-Flop einer Cache-Zeile entspricht, und das Flip-Flop konfiguriert ist, um die Schreibanforderung, die Gesamtanzahl von Anforderungen und die Anzahl von abgeschlossenen Anforderungen seiner entsprechenden Cache-Zeile zu speichern.

9. Cache (102) nach Anspruch 1, wobei der Cache (102) ferner umfasst: ein Arbitrierungsmodul (208), wobei das Arbitrierungsmodul (208) konfiguriert ist, um eine ausstehende Cache-Zeile basierend auf einem Zustand jeder Cache-Zeile und einer voreingestellten Regel zu bestimmen; und/oder der Cache (102) ferner umfasst: eine Multi-Thread-Warteschlange (209), wobei die Multi-Thread-Warteschlange (209) eine Vielzahl von Threads umfasst, wobei jeder Thread einer Cache-Zeile entspricht, und jeder Thread konfiguriert ist, um ausstehende Anforderungen für seine entsprechende Cache-Zeile zu speichern.

10. Elektronische Vorrichtung (100), **dadurch gekennzeichnet, dass** die elektronische Vorrichtung (100) umfasst: einen Prozessor (101) und den Cache (102) nach einem der Ansprüche 1-9.

11. Cache-Verwaltungsverfahren, **dadurch gekennzeichnet, dass** das Cache-Verwaltungsverfahren auf den Cache (102) nach einem der Ansprüche 1-9 angewendet wird, wobei der Cache (102) die Vielzahl von Cache-Zeilen, die erste Leseanforderungswarteschlange (201) und die zweite Leseanforderungswarteschlange (202) umfasst, und das Verfahren umfasst:
Senden der ersten Leseanforderung an die Speichersteuerung (103) durch die erste Leseanforderungswarteschlange (201), wobei die erste Leseanforderung konfiguriert ist, um Daten von dem Speicher (104) anzufordern und die Daten in der Speichersteuerung (103) zu speichern; und
Senden der zweiten Leseanforderung an die Speichersteuerung (103) durch die zweite Leseanforderungswarteschlange (202), wenn die Cache-Zeile, die der ersten Leseanforderung entspricht, leer ist, wobei die zweite Leseanforderung konfiguriert ist, um Daten, die der ersten Leseanforderung entsprechen, von der Speichersteuerung (103) anzufordern.

## Revendications

1. Cache (102), **caractérisé en ce que** le cache (102) comprend une pluralité de lignes de cache, une première file d'attente de demandes de lecture (201), et une deuxième file d'attente de demandes de lecture (202) ; la première file d'attente de demandes de lecture (201) est configurée pour stocker et envoyer une première demande de lecture à un contrôleur de mémoire (103) ; la première demande de lecture est configurée pour demander des données à une mémoire (104) et stocker les données dans le contrôleur de mémoire (103) ; et un nombre de la première demande de lecture qui peut être stocké dans la première file d'attente de demandes de lecture (201) est supérieur à un nombre de la pluralité de lignes de cache ; et la deuxième file d'attente de demandes de lecture (202) est configurée pour stocker et envoyer une seconde demande de lecture au contrôleur de mémoire (103) ; et la seconde demande de lecture correspond de manière biunivoque à la première demande de lecture, et la seconde demande de lecture est configurée pour demander des données correspondant à la première demande de lecture au contrôleur de mémoire (103) dans le cas où une ligne de cache correspondant à la première demande de lecture est inactive ;
dans lequel la ligne de cache est inactive lorsqu'elle est dans un état initialisé ou que les données actuellement stockées ont été consultées par un processeur et mises à jour dans une mémoire, et les données actuellement stockées dans la ligne de cache sont susceptibles d'être écrasées par d'autres données.

2. Cache (102) selon la revendication 1, dans lequel le cache (102) comprend en outre : une troisième file d'attente de demandes de lecture (203), qui est configurée pour stocker un indice de ligne de cache correspondant à la première demande de lecture, et pour stocker les données correspondant à la première demande de lecture dans la ligne de cache correspondant à la première demande de lecture sur la base de l'indice de ligne de cache de la première demande de lecture.

3. Cache (102) selon la revendication 1, dans lequel le cache (102) comprend en outre : le contrôleur de cache (204), qui est configuré pour attribuer une ligne de cache pour une demande envoyée par un processeur, dans lequel la demande est une demande qui n'atteint pas le cache (102) ; et un premier tampon (205), qui est configuré pour déterminer si une situation de lecture après écriture existe dans la ligne de cache correspondant à la demande, dans lequel si la situation de lecture après écriture n'existe pas dans la ligne de cache correspondant à la demande, une première demande de lecture est générée et envoyée à la première file d'attente de demandes de lecture (201) ; et si la situation de lecture après écriture existe dans la ligne de cache correspondant à la demande, la demande est stockée et il est déterminé si la situation de lecture après écriture existe dans une ligne de cache correspondant à une demande suivante de la demande.

4. Cache (102) selon la revendication 3, dans lequel le premier tampon (205) est en outre configuré pour générer une première demande de lecture correspondant à une demande lorsque la situation de lecture après écriture correspondant à la demande sauvegardée dans le premier tampon (205) est libérée.

5. Cache (102) selon la revendication 3, dans lequel le premier tampon (205) comprend un groupe de bascules avec le même nombre que celui des lignes de cache, dans lequel chaque bascule correspond à une ligne de cache, la bascule est configurée pour stocker une demande pour laquelle il existe une situation de lecture après écriture, et la ligne de cache correspondant à la demande est la même que la ligne de cache correspondant à la bascule stockant la demande.

6. Cache (102) selon la revendication 3, dans lequel le contrôleur de cache (204) est configuré pour attribuer une ligne de cache à une demande envoyée par le processeur à partir des lignes de cache autres que celle correspondant à une demande cible, dans lequel la demande cible est une demande stockée dans le premier tampon (205).

7. Cache (102) selon la revendication 1, dans lequel le cache (102) comprend en outre : un second tampon (206) et une file d'attente d'envoi (207) ; et le second tampon (206) est configuré pour stocker une demande d'écriture, un nombre de demandes en attente et un nombre de demandes terminées pour des lignes de cache respectives ; et lorsque le nombre total de demandes correspondant à une ligne de cache est identique au nombre de demandes terminées correspondant à la ligne de cache, la demande d'écriture correspondant à la ligne de cache est envoyée à la file d'attente d'envoi (207).

8. Cache (102) selon la revendication 7, dans lequel le second tampon (206) comprend un groupe de bascules avec le même nombre que celui des lignes de cache, dans lequel chaque bascule correspond à une ligne de cache, et la bascule est configurée pour stocker la demande d'écriture, le nombre total de demandes et le nombre de demandes terminées de sa ligne de cache correspondante.

9. Cache (102) selon la revendication 1, dans lequel le cache (102) comprend en outre : un module d'arbitrage (208), dans lequel le module d'arbitrage (208) est configuré pour déterminer une ligne de cache en attente sur la base d'un état de chaque ligne de cache et d'une règle prédéfinie ; et/ou le cache (102) comprend en outre : une file d'attente multi-fils (209), dans lequel la file d'attente multi-fils (209) comprend une pluralité de fils d'exécution, dans lequel chaque fil d'exécution correspond à une ligne de cache, et chaque fil d'exécution est configuré pour stocker des demandes en attente pour sa ligne de cache correspondante.

10. Dispositif électronique (100), **caractérisé en ce que** le dispositif électronique (100) comprend : un processeur (101) et le cache (102) selon l'une quelconque des revendications 1 à 9.

11. Procédé de gestion de cache, **caractérisé en ce que** le procédé de gestion de cache est appliqué au cache (102) selon l'une quelconque des revendications 1 à 9, dans lequel le cache (102) comprend la pluralité de lignes de cache, la première file d'attente de demandes de lecture (201) et la deuxième file d'attente de demandes de lecture (202), et le procédé comprend :
la file d'attente de la première demande de lecture (201) envoie la première demande de lecture au contrôleur de mémoire (103), dans lequel la première demande de lecture est configurée pour demander des données à la mémoire (104) et stocker les données dans le contrôleur de mémoire (103) ; et
la deuxième file d'attente de demandes de lecture (202) envoie la seconde demande de lecture au contrôleur de mémoire (103) lorsque la ligne de cache correspondant à la première demande de lecture est inactive, dans lequel la seconde demande de lecture est configurée pour demander des données correspondant à la première demande de lecture au contrôleur de mémoire (103).
